# FASCICULE DE BREVET EUROPEEN

(11) **EP 1 517 474 B1**
(45) Date de publication et mention de la délivrance du brevet: **13.03.2013**
(21) Numéro de dépôt: 04364059.8
(22) Date de dépôt: 13.09.2004
(51) Int. Cl.: H04L 12/24

(54) **Procédé et dispositif correspondant de détection automatique du débit d'un réseau, notamment de type CAN (Controller Area Network), et de configuration du réseau au débit détecté**
Verfahren und korrespondierende Vorrichtung zur automatischen Erkennung der Bitrate eines Netzwerks, insbesondere vom Typ CAN (Controller Area Network), und zur Konfiguration des Netzwerks bei der erkannten Bitrate
Method and corresponding apparatus for the automatic detection of the bit rate of a network, particularly of type CAN (Controller Area Network), and for the configuration of the network at the detected bit rate

(30) Priorité: 17.09.2003 FR 0310941
(43) Date de publication de la demande: 23.03.2005
(73) Titulaire: ATMEL NANTES SA, 44306 Nantes Cédex 3 (FR)
(72) Inventeur: Berthy, Jean-Sébastien, 44390 Petit-Mars (FR)
(74) Mandataire: Vidon, Patrice

(56) Documents cités:
- EP-A- 1 187 373
- EP-A- 1 206 092
- US-A- 6 049 888
- US-A1- 2003 058 894

## Description

Le domaine de l'invention est celui des réseaux de communication.

Plus précisément, l'invention concerne un procédé de détection automatique, par un dispositif connecté à un réseau, du débit de ce réseau et de configuration du dispositif au débit détecté. L'invention concerne également le dispositif mettant en oeuvre ce procédé.

L'invention s'applique notamment, mais non exclusivement, dans le cas où le réseau est de type bus CAN.

A titre illustratif et dans un souci de simplification, on présente maintenant la technique de l'art antérieur et ses inconvénients dans le cas précité où le réseau est de type bus CAN.

On rappelle qu'un bus CAN (« Controller Area Network ») est un bus série permettant de connecter une pluralité de dispositifs, appelés « unités de contrôle » et comprenant chacun un contrôleur CAN. Ce type de bus est aujourd'hui principalement utilisé dans le domaine de l'industrie et dans le domaine de l'automobile.

Typiquement, dans une voiture, deux bus CAN sont utilisés. L'un, dit bus CAN haute vitesse (jusqu'à 1 Mb/s), permet d'interconnecter des unités de contrôle relatives aux éléments ou fonctionnalités suivants : tableau de bord, moteur, freinage (anti-verrouillage), suspension active, transmission, etc. L'autre, dit bus CAN basse vitesse (jusqu'à 125 kb/s), permet d'interconnecter des unités de contrôle relatives aux éléments ou fonctionnalités suivants : tableau de bord, éclairage, climatisation, coussins gonflables de sécurité, verrouillage des portes, fenêtres électriques, etc.

Chaque bus CAN met en oeuvre un protocole du même nom (protocole CAN) qui est un protocole de communication série qui supporte des systèmes temps réel avec un haut niveau de fiabilité dans un environnement limité et sévère comme une usine, un atelier, une voiture... Le protocole CAN couvre deux des sept couches du modèle d'interconnexion des systèmes ouverts OSI de l'ISO, à savoir la couche physique (couche 1) et la couche liaison de données (couche 2). Pour plus d'informations sur le bus CAN, on pourra se reporter à la norme ISO 11898.

La couche liaison de données du protocole CAN est telle que chaque unité de contrôle peut émettre et recevoir des données. Les données sont véhiculées sur le bus sous la forme de paquets (aussi appelés trames ou messages) asynchrones de format défini mais de longueur variable et limitée. Dès que le bus est libre, n'importe quelle unité de contrôle reliée au bus peut émettre un nouveau paquet. Un mécanisme d'interruption pour les paquets plus prioritaires est prévu, ainsi qu'un mécanisme d'arbitrage des conflits résultant de l'émission simultanée de plusieurs paquets sur le bus lorsqu'il est libre. Voir aussi les documents EP-A1-1187373 et US-A-6049888.

Traditionnellement, quand on souhaite connecter sur un bus CAN une nouvelle unité de contrôle (c'est-à-dire un nouveau dispositif comprenant un contrôleur CAN qui exécute une application (couche 7 du modèle OSI)), on procède de la façon suivante. Le développeur de l'application exécutée par le contrôleur CAN doit connaître la fréquence horloge du contrôleur CAN (par exemple 12 MHz). Il suppose par ailleurs que le débit du réseau prend l'une d'un nombre limité de valeurs (trois valeurs généralement). Par exemple, il suppose que le débit du réseau est égal à 100, 250 ou 500 kb/s. Pour chacune des trois valeurs supposées du débit du réseau, il détermine a priori, et à partir de la connaissance de la fréquence horloge du contrôleur CAN, une configuration de débit pour le contrôleur CAN. Il développe ensuite l'application de façon que, en fonctionnement, l'application charge une première configuration de débit associée à une première valeur supposée du débit du réseau ; si l'application reçoit des messages d'erreur, elle charge une deuxième configuration de débit associée à une deuxième valeur supposée du débit du réseau ; et ainsi de suite de façon à tester (si nécessaire) les différentes configurations de débit prédéterminées.

Un inconvénient de la technique connue précitée est qu'elle ne peut pas être mise en oeuvre dans les situations où on ne connaît pas la fréquence horloge du contrôleur CAN.

Un autre inconvénient de la technique connue précitée est qu'elle ne marche pas si aucune des hypothèses sur le débit du réseau est correcte.

Encore un autre inconvénient de la technique connue précitée est que, lorsque plusieurs configurations de débit possibles sont testées successivement, le contrôleur CAN perturbe réellement le bus CAN. Ceci peut même conduire à une éjection du contrôleur CAN du bus CAN.

L'invention a notamment pour objectif de pallier ces différents inconvénients de l'état de la technique.

Plus précisément, l'un des objectifs de la présente invention est de fournir un procédé et un dispositif de détection automatique du débit d'un réseau et de configuration au débit détecté, ne nécessitant pas la connaissance de la fréquence horloge du dispositif, ni des hypothèses sur le débit du réseau.

L'invention a également pour objectif de fournir de tels procédé et dispositif ne perturbant pas le réseau.

Un autre objectif de l'invention est de fournir de tels procédé et dispositif qui soient simples à mettre en oeuvre et peu coûteux.

Ces différents objectifs, ainsi que d'autres qui apparaîtront par la suite, sont atteints selon l'invention à l'aide d'un procédé de détection automatique du débit d'un réseau et de configuration au débit détecté par un dispositif connecté au réseau, ce procédé comprenant :
* une phase d'initialisation comprenant les étapes suivantes :
   - on place le dispositif dans un mode d'écoute, dans lequel il peut recevoir des messages provenant du réseau mais ne peut pas émettre de messages sur le réseau ;
   - on initialise le dispositif avec une configuration de débit initiale ;
   - on déclenche une première temporisation ;
* une phase de traitement itératif comprenant, pour chaque itération, les étapes suivantes :
   - si au moins une condition d'adaptation de débit est vérifiée, on interrompt la phase de traitement itératif, on valide la configuration de débit courante et on place le dispositif dans un mode normal ;
   - si au moins une condition de non-adaptation de débit est vérifiée ou si la première temporisation expire sans qu'une condition d'adaptation de débit ou une condition de non-adaptation de débit ait été vérifiée, on réinitialise la première temporisation et on remplace la configuration de débit courante par une nouvelle configuration de débit obtenue par mise en oeuvre d'un mécanisme d'obtention d'une pluralité de configurations de débit possibles, sans connaissance d'une fréquence horloge fₕ du dispositif et sans hypothèse sur le débit du réseau.

Le principe général de l'invention consiste donc à tester, dans un mode d'écoute permettant de ne pas perturber le réseau, une pluralité de configurations de débit obtenues sans connaissance de la fréquence horloge du dispositif et sans hypothèse sur le débit du réseau.

De façon avantageuse, ladite au moins une condition de non-adaptation de débit est la détection par le dispositif d'une erreur, dite erreur de bit, sur au moins un bit d'un message reçu par le dispositif.

Avantageusement, ladite au moins une condition d'adaptation de débit est l'acquittement par le dispositif d'un message reçu.

Préférentiellement, ledit mécanisme permet d'obtenir successivement toutes les configurations de débit possibles du dispositif.

Selon une caractéristique avantageuse, la phase d'initialisation comprend en outre une étape de déclenchement d'une deuxième temporisation, et la phase de traitement itératif comprend en outre, pour chaque itération, une étape d'interruption du procédé si la deuxième temporisation expire sans qu'une configuration de débit courante ait été validée.

Dans un mode de réalisation avantageux de l'invention, le réseau est un bus CAN, et le dispositif comprend un contrôleur CAN complété par rapport à un contrôleur CAN classique de façon à mettre en oeuvre le procédé selon l'invention de détection automatique du débit du réseau et de configuration au débit détecté.

Chacun des bits compris dans un message possède par exemple un temps nominal défini par les paramètres suivants :
- un scalaire BRP, tel que : TQ = BRP / fₕ, avec TQ une unité de temps et fₕ la fréquence horloge du dispositif ;
- la longueur L_{PRS}, exprimée en nombre d'unité de temps TQ, d'un segment de propagation visant à compenser le délai physique sur le bus CAN ;
- les longueurs L_{PHS1} et L_{PHS2}, exprimées en nombre d'unité de temps TQ, de premier et second segments de phase permettant de positionner un point d'échantillonnage.

Dans ce cas, avantageusement, pour chacune de la pluralité de configurations de débit possibles, ledit mécanisme détermine des valeurs pour le scalaire BRP et les longueurs L_{PRS}, L_{PHS1} et L_{PHS2}, sans connaissance de la fréquence horloge fₕ du dispositif et sans hypothèse sur le débit du réseau.

Avantageusement, ledit mécanisme met en oeuvre une boucle d'incrémentation de la longueur L_{PHS2}, elle-même incluse dans une boucle d'incrémentation de la longueur L_{PHS1}, elle-même incluse dans une boucle d'incrémentation de la longueur L_{PRS}, elle-même incluse dans une boucle d'incrémentation du scalaire BRP. Les boucles d'incrémentation des longueurs L_{PRS}, L_{PHS1} et L_{PHS2} sont telles que les longueurs L_{PRS}, L_{PHS1} et L_{PHS2} sont incrémentées de façon homogène.

L'invention concerne également un dispositif destiné à être connecté à un réseau, caractérisé en ce qu'il comprend des moyens de détection automatique du débit du réseau et de configuration au débit détecté, comprenant eux-mêmes :
* des moyens d'initialisation comprenant :
   - des moyens de basculement d'un mode normal à un mode d'écoute, dans lequel sont activés des moyens de blocage de messages émis par le dispositif vers le réseau, le dispositif continuant à recevoir des messages provenant du réseau ;
   - des moyens d'initialisation du dispositif avec une configuration de débit initiale ;
   - des moyens de déclenchement d'une première temporisation ;
* des moyens de traitement itératif comprenant les moyens suivants, activés lors de chaque itération :
   - des premiers moyens de détection qu'au moins une condition d'adaptation de débit est vérifiée, les moyens suivants étant activés en cas de détection positive par les premiers moyens de détection : des moyens d'interruption du traitement itératif, des moyens de validation de la configuration de débit courante et des moyens de basculement du mode d'écoute au mode normal ;
   - des seconds moyens de détection qu'au moins une condition de non-adaptation de débit est vérifiée ou que la première temporisation expire sans qu'une condition d'adaptation de débit ou une condition de non-adaptation de débit ait été vérifiée, les moyens suivants étant activés en cas de détection positive par les seconds moyens de détection : des moyens de réinitialisation de la première temporisation et des moyens de remplacement de la configuration de débit courante par une nouvelle configuration de débit obtenue par mise en oeuvre d'un mécanisme d'obtention d'une pluralité de configurations de débit possibles, sans connaissance d'une fréquence horloge fₕ du dispositif et sans hypothèse sur le débit du réseau.

De façon avantageuse, ladite au moins une condition de non-adaptation de débit est la détection par le dispositif d'une erreur, dite erreur de bit, sur au moins un bit d'un message reçu par le dispositif.

Avantageusement, ladite au moins une condition d'adaptation de débit est l'acquittement par le dispositif d'un message reçu.

Préférentiellement, ledit mécanisme permet d'obtenir successivement toutes les configurations de débit possibles du dispositif.

Selon une caractéristique avantageuse, les moyens d'initialisation comprennent en outre des moyens de déclenchement d'une deuxième temporisation. En outre, les moyens de traitement itératif comprennent en outre des troisièmes moyens de détection, activés lors de chaque itération, permettant de détecter si la deuxième temporisation expire sans qu'une configuration de débit courante ait été validée, des moyens d'interruption du procédé étant activés en cas de détection positive par les troisièmes moyens de détection.

Dans un mode de réalisation avantageux de l'invention, le réseau est un bus CAN, et le dispositif comprend un contrôleur CAN complété comprenant lui-même lesdits moyens de détection automatique du débit du réseau et de configuration au débit détecté.

Chacun des bits compris dans un message possède par exemple un temps nominal défini par les paramètres suivants :
- un scalaire BRP, tel que : TQ = BRP / fₕ, avec TQ une unité de temps et fₕ la fréquence horloge du dispositif ;
- la longueur L_{PRS}, exprimée en nombre d'unité de temps TQ, d'un segment de propagation visant à compenser le délai physique sur le bus CAN ;
- les longueurs L_{PHS1} et L_{PHS2}, exprimées en nombre d'unité de temps TQ, de premier et second segments de phase permettant de positionner un point d'échantillonnage.

Dans ce cas, avantageusement, pour chacune de la pluralité de configurations de débit possibles, ledit mécanisme détermine des valeurs pour le scalaire BRP et les longueurs L_{PRS}, L_{PHS1} et L_{PHS2}, sans connaissance de la fréquence horloge fₕ du dispositif et sans hypothèse sur le débit du réseau.

Avantageusement, ledit mécanisme met en oeuvre une boucle d'incrémentation de la longueur L_{PHS2}, elle-même incluse dans une boucle d'incrémentation de la longueur L_{PHS1}, elle-même incluse dans une boucle d'incrémentation de la longueur L_{PRS}, elle-même incluse dans une boucle d'incrémentation du scalaire BRP. Les boucles d'incrémentation des longueurs L_{PRS}, L_{PHS1} et L_{PHS2} sont telles que les longueurs L_{PRS}, L_{PHS1} et L_{PHS2} sont incrémentées de façon homogène.

De façon avantageuse, les moyens de basculement du mode normal au mode d'écoute comprennent des moyens génération d'un signal de sélection de mode (Autobaud), prenant la valeur « 0 » ou « 1 » selon que le dispositif doit fonctionner dans le mode normal ou d'écoute respectivement. En outre, le contrôleur CAN complété comprend un contrôleur CAN classique modifié pour comprendre lui-même lesdits moyens de détection automatique du débit du réseau et de configuration au débit détecté, hormis lesdits moyens de blocage de messages émis. Enfin, les moyens de blocage de messages émis comprennent des moyens de réalisation de la fonction logique « OU » entre le signal de sélection de mode et le signal d'émission (TxDC') du contrôleur CAN classique, le signal de sortie des moyens de réalisation de la fonction logique « OU » constituant le signal d'émission (TXDC) du contrôleur CAN complété.

Avantageusement, le contrôleur CAN complété comprend en outre des moyens de rebouclage de la sortie sur l'entrée du contrôleur CAN classique, comprenant :
- des moyens de réalisation de la fonction logique « ET » entre le signal d'émission (TxDC') du contrôleur CAN classique et le signal de réception (RxDC) du contrôleur CAN complété ;
- des moyens de multiplexage recevant sur une première entrée le signal de sortie des moyens de réalisation de la fonction logique « ET » et sur une deuxième entrée le signal de réception (RxDC) du contrôleur CAN complété, le signal de sortie des moyens de multiplexage constituant le signal de réception (RxDC') du contrôleur CAN classique, les moyens de multiplexage étant commandés par le signal de sélection de mode de façon que la première ou la seconde entrée soit sélectionnée selon que le signal de sélection de mode prend la valeur « 1 » ou « 0 » respectivement.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique d'un système connu d'interconnexion d'une pluralité de dispositifs par l'intermédiaire d'un bus CAN, système dans lequel peut être mis en oeuvre le procédé selon l'invention de détection et configuration automatique de débit ;
- la figure 2 illustre la structure connue de chaque bit compris dans un message véhiculé sur un bus CAN ;
- la figure 3 présente un schéma bloc fonctionnel d'un exemple de réalisation d'un dispositif apparaissant sur la figure 1 et permettant la mise en oeuvre du procédé selon l'invention ;
- la figure 4 présente un mode de réalisation particulier du bloc d'adaptation électronique apparaissant sur la figure 3 ;
- la figure 5 présente un organigramme d'un mode de réalisation particulier du procédé selon l'invention.

L'invention concerne donc un procédé et un dispositif de détection automatique du débit d'un réseau et de configuration au débit détecté.

Dans la suite de la description, on considère uniquement le cas où le réseau est un bus CAN. Il est clair cependant que l'invention s'applique également à d'autres types de réseau.

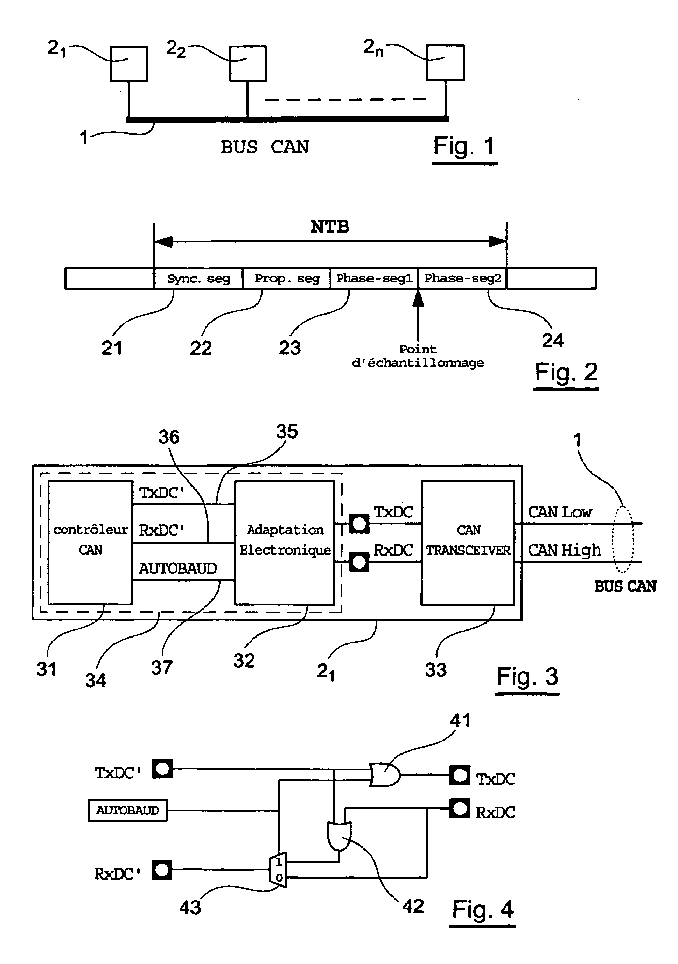

Comme déjà indiqué ci-dessus et illustré sur le synoptique de la **figure 1**, un bus CAN 1 est un bus série permettant de connecter une pluralité de dispositifs 2₁, 2₂... 2ₙ, appelés « unités de contrôle » et comprenant chacun un contrôleur CAN.

On rappelle maintenant brièvement quelques caractéristiques essentielles du protocole CAN, qui est un protocole de communication série mis en oeuvre par un bus CAN. Pour plus d'informations sur ce protocole CAN et le bus CAN, on pourra se reporter à la norme ISO 11898, insérée ici par référence.

Le protocole CAN distingue quatre types de messages CAN :
- les message de données (Data Frame), au format standard (identifiant 11-bits) ou étendu (identifiant 29-bits) ;
- les messages de requête de données (Remote Frame) ;
- les messages d'erreur (Error Frame) ;
- les messages de temporisation du réseau (Overload Frame).

Un message CAN standard comprend :
- un champ de début de trame ;
- un champ d'arbitrage, qui est constitué d'un identifiant et d'un bit « Requête de données » utilisé pour distinguer un message de données (Data Frame), d'un message de requête (Remote Frame) ;
- un champ de contrôle, qui contient un bit « Identifiant étendu » (IDE) et un nombre de données (DLC) indiquant le nombre d'octet de données qui suivent dans le champ de données. Dans un message de requête, le nombre DLC est le nombre d'octet de données demandé ;
- un champ de données, pouvant comporter jusqu'à huit octets de données ;
- un champ de vérification (CRC), garantissant l'intégrité du message ;
- un champ d'acquittement (ACK), composé d'un créneau et d'un délimiteur d'acquittement. Le bit dans le créneau d'acquittement est émis à un niveau récessif et est écrasé à un niveau dominant par les dispositifs récepteurs qui ont à ce moment reçu les données correctement ;
- un champ de fin de message (EOF) ;
- un champ d'inter-message (IFS), qui est un nombre minimum de bits séparant deux messages consécutifs.

Le protocole CAN distingue cinq types d'erreurs, qui ne s'excluent pas mutuellement :
- une erreur de bit (« bit error »), lorsque le bit lui-même est entaché d'erreur ;
- une erreur de bourrage (« stuff bit error ») ;
- une erreur d'acquittement (« ACK error ») ;
- une erreur de vérification (« CRC error ») ;
- une erreur de structure.

Un dispositif connecté au bus CAN et qui détecte une condition d'erreur a pour mission de le signaler, en transmettant un message d'erreur. Ces particularités font qu'un dispositif qui se branche sur un bus CAN doit avoir une configuration de débit correct, au risque de mettre le bus CAN existant en péril ou de se voir exclure de ce bus CAN.

On présente maintenant, en relation avec la **figure 2**, la structure connue (« CAN Bit Timing »), et définie dans le protocole CAN, de chaque bit compris dans un message véhiculé sur un bus CAN.

Le temps nominal pour chaque bit (ou NTB, pour « Nominal Time Bit » en anglais) est définie par une structure composée de quatre segments distincts 21 à 24. Chacun de ces quatre segments est composé d'un nombre entier d'unité de temps (ou TQ, pour « Time Quanta » en anglais). La longueur de cette unité de temps TQ est définie à partir de la fréquence horloge fₕ du dispositif et d'un scalaire BRP propre au dispositif : TQ = BRP / fₕ. Le nombre total d'unités de temps TQ dans un bit doit être compris entre 8 et 25.

Le premier segment est un segment de synchronisation 21 (« synchronization segment »), dont la longueur est fixée à une unité de temps TQ.

Le second segment 22 est un segment de propagation (« propagation segment »). Il a pour rôle de compenser le délai physique induit par le bus CAN. Sa longueur L_{PRS} est programmable entre une et huit unités de temps TQ.

Les troisième et quatrième segments 23, 24 (« phase segment 1 » et « phase segment 2 ») sont des segments de phase, utilisés pour positionner un point d'échantillonnage. Leurs longueurs L_{PHS1} et L_{PHS2} sont également programmables.

On présente désormais, en relation avec la **figure 3**, un exemple de réalisation d'un dispositif apparaissant sur la figure 1 (par exemple celui référencé 2₁) et permettant la mise en oeuvre du procédé selon l'invention.

De façon habituelle, le dispositif 2₁ comprend un contrôleur (ou microcontrôleur) CAN classique 31 et un circuit émetteur/récepteur CAN 33 (« CAN transceiver »). Ce dernier 33 est spécifique à la couche physique du protocole CAN, et est conçu pour assurer l'interface entre le contrôleur CAN classique 31 (qui travaille au niveau logique) et le bus CAN 1 (qui travaille au niveau physique). Le contrôleur CAN classique 31 émet un signal 35 (appelé ci-après signal d'émission TxDC') et en reçoit un autre 36 (appelé ci-après signal de réception RxDC').

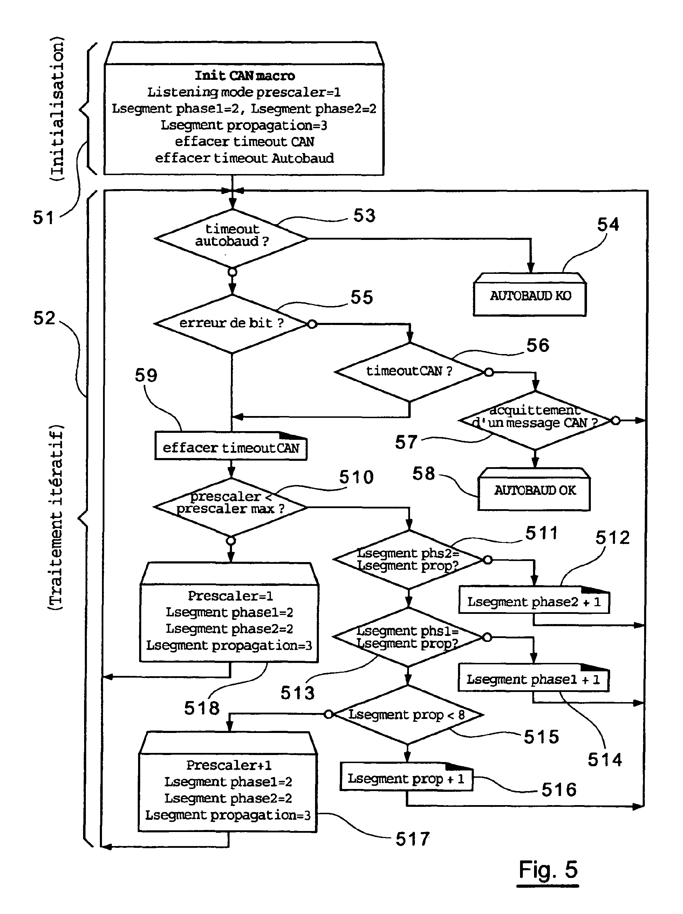

Selon la présente invention, le contrôleur CAN classique 31 est modifié en ce que :
- il exécute un algorithme de détection et configuration automatique de débit (procédé selon l'invention, décrit en détail ci-dessous en relation avec la figure 5) ;
- il génère un signal de sélection de mode 37 (Autobaud).

Le dispositif 2₁ est par ailleurs modifié en ce qu'il comprend en outre un bloc d'adaptation électronique 32, s'interfaçant entre le contrôleur CAN classique 31 et le circuit émetteur/récepteur CAN 33. Le contrôleur CAN classique 31 et bloc d'adaptation électronique 32 forment ensemble un contrôleur CAN complété 34, propre à la présente invention. Ainsi, le bloc d'adaptation électronique 32 :
- d'un côté, reçoit le signal d'émission TxDC' et le signal de sélection de mode 37 (Autobaud) émis par le contrôleur CAN classique 3, et émet le signal de réception RxDC' reçu par le contrôleur CAN classique 3 ;
- de l'autre, émet le signal d'émission TxDC du contrôleur CAN complété 4, et reçoit le signal de réception RxDC' du contrôleur CAN complété 4.

Le bloc d'adaptation électronique 32 est commandé par le signal de sélection de mode 37 (Autobaud) de façon que, au cours de l'exécution de l'algorithme précité, le dispositif 2₁ bascule de l'un à l'autre des modes suivants :
- un mode normal, dans lequel le contrôleur CAN classique 31 peut émettre ou recevoir des messages sur ou depuis le bus CAN ;
- un mode d'écoute, dans lequel le contrôleur CAN classique 31 peut recevoir des messages venant du bus CAN mais ne peut pas en émettre sur ce bus CAN, et dans lequel le contrôleur CAN classique 31 peut recevoir les éventuels messages qu'il émet vers le bus CAN (et qui comme indiqués précédemment sont bloqués avant d'y parvenir).

On présente maintenant, en relation avec la **figure 4**, un mode de réalisation particulier du bloc d'adaptation électronique 32 apparaissant sur la figure 3.

Il comprend des moyens de blocage de messages émis par le contrôleur CAN classique 31 et des moyens de rebouclage de la sortie sur l'entrée du contrôleur CAN classique 31.

Le signal de sélection de mode 37 (Autobaud) prend la valeur « 0 » si le dispositif 2₁ doit fonctionner dans le mode normal, ou « 1 » pour un fonctionnement dans le mode d'écoute.

Les moyens de blocage de messages émis comprennent une porte OU 41, réalisant la fonction logique « OU » entre le signal de sélection de mode 37 (Autobaud) et le signal d'émission (TxDC') du contrôleur CAN classique 31. Le signal de sortie de la porte OU 41 constitue le signal d'émission (TxDC) du contrôleur CAN complété 34.

Ainsi, quand le signal de sélection de mode 37 (Autobaud) prend la valeur « 0 » (mode normal), le signal d'émission (TxDC') du contrôleur CAN classique 31 est confondu avec le signal d'émission (TxDC) du contrôleur CAN complété 34, et le dispositif 2₁ peut donc émettre des messages sur le bus CAN.

En revanche, quand le signal de sélection de mode 37 (Autobaud) prend la valeur « 1 » (mode d'écoute), le signal d'émission (TxDC) du contrôleur CAN complété 34 vaut toujours « 1 », ce qui correspond à un état de repos du dispositif (puisque « 1 » est l'état récessif du bus CAN) et donc aucun message n'est émis par le dispositif 2₁ sur le bus CAN.

Les moyens de rebouclage de la sortie sur l'entrée du contrôleur CAN classique 31 comprennent:
- une porte ET 42, réalisant la fonction logique « ET » entre le signal d'émission (TxDC') du contrôleur CAN classique 31 et le signal de réception (RxDC) du contrôleur CAN complété 34 ;
- un multiplexeur 43 recevant sur une première entrée le signal de sortie de la porte ET 42 et sur une deuxième entrée le signal de réception (RxDC) du contrôleur CAN complété 34. Le signal de sortie du multiplexeur constitue le signal de réception (RxDC') du contrôleur CAN classique 31. Le multiplexeur est commandé par le signal de sélection de mode 37 (Autobaud), de façon que la première ou la seconde entrée soit sélectionnée selon que le signal de sélection de mode prend la valeur « 1 » ou « 0 » respectivement.

Ainsi, quand le signal de sélection de mode 37 (Autobaud) prend la valeur « 0 » (mode normal), le signal de réception (RxDC') du contrôleur CAN classique 31 est confondu avec le signal de réception (RxDC) du contrôleur CAN complété 34, et le dispositif 2₁ ne reçoit donc que des messages provenant du bus CAN.

En revanche, quand le signal de sélection de mode 37 (Autobaud) prend la valeur « 1 » (mode d'écoute), le signal de réception (RxDC') du contrôleur CAN classique 31 est une combinaison (fonction ET) du signal d'émission (TxDC') du contrôleur CAN classique 31 et du signal de réception (RxDC) du contrôleur CAN complété 34. Du fait que « 1 » est l'état récessif du bus CAN, ceci permet de recevoir aussi bien des messages provenant du bus CAN que des messages (message d'erreur ou message d'acquittement notamment) émis par le contrôleur CAN classique 31.

On présente maintenant, en relation avec l'organigramme de la **figure 5**, un mode de réalisation particulier du procédé selon l'invention de détection et configuration automatique de débit.

On distingue une phase d'initialisation 51 et une phase de traitement itératif 52.

Chaque configuration de débit est définie par les valeurs données aux paramètres suivants (voir ci-dessus la description de la figure 2) :
- le scalaire BRP (noté « prescaler » sur la figure 5) ;
- la longueur L_{PRS} (notée « L segment propagation » sur la figure 5), exprimée en unité de temps TQ, du segment de propagation 22 ;
- les longueurs L_{PHS1} et L_{PHS2} (notées « L segment phase 1 » et « L segment phase 2 » respectivement sur la figure 5), également exprimées en unité de temps TQ, des premier et second segments de phase 23, 24.

La phase d'initialisation 51 consiste à :
- placer le dispositif dans le mode d'écoute (« listening mode » en anglais), en donnant la valeur « 1 » au signal de sélection de mode (Autobaud) (voir discussion ci-dessus) ;
- initialiser le dispositif avec une configuration de débit initiale, correspondant à une valeur minimale de débit. Pour cela, on donne par exemple la valeur initiale « 1 » au scalaire BRP (« prescaler »), « 3 » à la longueur L_{PRS} (« L segment propagation ») et « 2 » à chacune des longueurs L_{PHS1} et L_{PHS2} (« L segment phase 1 » et « L segment phase 2 ») ;
- déclencher (c'est-à-dire effacer) une première temporisation (notée « timeout CAN » sur la figure 5) ;
- déclencher une deuxième temporisation (notée « timeout Autobaud » sur la figure 5).

Les première et deuxième temporisations sont par exemple gérées par des compteurs qui sont propres au contrôleur CAN complété 34.

La première temporisation (« timeout CAN ») est utilisée pour changer de configuration de débit si après une première durée prédéterminée le contrôleur CAN classique 31 n'a émis (et donc reçu puisque son entrée est rebouclée sur sa sortie) ni un message d'erreur de bit, ni un message d'acquittement d'un message reçu.

La deuxième temporisation (« timeout Autobaud ») est utilisée pour arrêter l'exécution du procédé sur un échec si après une deuxième durée prédéterminée aucune configuration de débit n'a pu être validée. On évite ainsi un bouclage sans fin.

On présente maintenant en détail les étapes effectuées à chaque itération de la phase de traitement itératif 52.

Au cours de l'étape référencée 53, on détecte si la deuxième temporisation (« timeout Autobaud ») est écoulée. Si c'est le cas, on arrête l'exécution du procédé sur un échec (« autobaud KO »), lors de l'étape référencée 54.

Sinon, on passe à l'étape référencée 55, au cours de laquelle on détecte si le contrôleur CAN classique 31 a émis un message d'erreur de bit. Si ce n'est pas le cas, on détecte si la première temporisation (« timeout CAN ») est écoulée, lors de l'étape référencée 56.

Si la première temporisation (« timeout CAN ») n'est pas écoulée, on passe à l'étape référencée 57, au cours de laquelle on détecte si le contrôleur CAN classique 31 a émis un message d'acquittement d'un message préalablement reçu. Si c'est le cas, lors de l'étape référencée 58 on arrête l'exécution du procédé sur une réussite (« autobaud OK »), en validant la configuration de débit courante et en plaçant le dispositif dans le mode normal. Si le contrôleur CAN classique 31 n'a pas émis de message d'acquittement, on revient à l'étape référencée 53 (nouvelle itération).

Si le contrôleur CAN classique 31 a émis un message d'erreur de bit ou si la première temporisation (« timeout CAN ») est écoulée, on passe à l'étape référencée 59, au cours de laquelle on réinitialise la première temporisation (« timeout CAN »). Puis, lors de l'étape référencée 510, on détecte si le scalaire BRP (« prescaler ») est inférieur à un scalaire maximal prédéterminé (« prescaler max »). Si ce n'est pas le cas, on passe à l'étape référencée 511, au cours de laquelle on détecte si la longueur courante du second segment de phase (« L segment phase 2 ») est inférieure à la longueur courante du segment de propagation (« L segment propagation »). En cas de réponse négative à l'étape référencée 511, on incrémente la longueur courante du second segment de phase, lors de l'étape référencée 512 et on revient à l'étape référencée 53 (nouvelle itération). En cas de réponse positive à l'étape référencée 511, on passe à l'étape référencée 513, au cours de laquelle on détecte si la longueur courante du premier segment de phase (« L segment phase 1 ») est inférieure à la longueur courante du segment de propagation (« L segment propagation »). En cas de réponse négative à l'étape référencée 513, on incrémente la longueur courante du premier segment de phase, lors de l'étape référencée 514 et on revient à l'étape référencée 53 (nouvelle itération). En cas de réponse positive à l'étape référencée 513, on passe à l'étape référencée 515, au cours de laquelle on détecte si la longueur courante du segment de propagation (« L segment propagation ») est inférieure à huit (valeur maximale de cette longueur). En cas de réponse positive à l'étape référencée 515, on passe à l'étape référencée 516, au cours de laquelle on incrémente la longueur courante du segment de propagation, puis on revient à l'étape référencée 53 (nouvelle itération). En cas de réponse négative à l'étape référencée 515, on passe à l'étape référencée 517, au cours de laquelle on incrémente la valeur du scalaire BRP (« prescaler ») et on redonne leurs valeurs initiales (« 2 », « 2 » et « 3 » respectivement) aux longueurs des premier et second segments de phase (« L segment phase 1 » et « L segment phase 2 ») et à la longueur du segment de propagation (« L segment propagation »), puis on revient à l'étape référencée 53 (nouvelle itération).

Si, lors de l'étape référencée 510, on détecte que le scalaire BRP (« prescaler ») n'est pas inférieur au scalaire maximal (« prescaler max »), on passe à l'étape référencée 518, au cours de laquelle on redonne leurs valeurs initiales (« 1 », « 2 », « 2 » et « 3 » respectivement) à l'ensemble des paramètres (scalaire BRP (« prescaler »), longueurs des premier et second segments de phase (« L segment phase 1 » et « L segment phase 2 ») et longueur du segment de propagation (« L segment propagation »)), puis on revient à l'étape référencée 53 (nouvelle itération).

On notera que les boucles d'incrémentation de longueur du segment de propagation et des longueurs des premier et second segments de phase sont telles que ces trois longueurs sont incrémentées de façon homogène.

Le procédé selon l'invention, de détection et configuration automatique de débit, peut être réalisée sous forme logicielle (software) ou matérielle (hardware).

## Revendications

1. Procédé de détection automatique du débit d'un réseau et de configuration au débit détecté par un dispositif (2₁) connecté au réseau (1), **caractérisé en ce qu'**il comprend :
* une phase d'initialisation (51) comprenant les étapes suivantes :
- on place le dispositif dans un mode d'écoute, dans lequel il peut recevoir des messages provenant du réseau mais ne peut pas émettre de messages sur le réseau ;
- on initialise le dispositif avec une configuration de débit initiale ;
- on déclenche une première temporisation (timeout CAN) ;
* une phase de traitement itératif (52) comprenant, pour chaque itération, les étapes suivantes :
- si au moins une condition d'adaptation de débit est vérifiée (57), on interrompt la phase de traitement itératif, on valide la configuration de débit courante et on place le dispositif dans un mode normal (58) ;
- si au moins une condition de non-adaptation de débit est vérifiée (55) ou si la première temporisation expire sans qu'une condition d'adaptation de débit ou une condition de non-adaptation de débit ait été vérifiée (56), on réinitialise la première temporisation (59) et on remplace la configuration de débit courante par une nouvelle configuration de débit obtenue par mise en oeuvre d'un mécanisme d'obtention d'une pluralité de configurations de débit possibles, sans connaissance d'une fréquence horloge fₕ du dispositif et sans hypothèse sur le débit du réseau (510 à 518).

2. Procédé selon la revendication 1, **caractérisé en ce que** ladite au moins une condition de non-adaptation de débit est la détection par le dispositif d'une erreur, dite erreur de bit, sur au moins un bit d'un message reçu par le dispositif.

3. Procédé selon l'une quelconque des revendications 1 et 2, **caractérisé en ce que** ladite au moins une condition d'adaptation de débit est l'acquittement par le dispositif d'un message reçu.

4. Procédé selon l'une quelconque des revendications 1 à 3, **caractérisé en ce que** ledit mécanisme permet d'obtenir successivement toutes les configurations de débit possibles du dispositif.

5. Procédé selon l'une quelconque des revendications 1 à 4, **caractérisé en ce que** la phase d'initialisation comprend en outre une étape de déclenchement d'une deuxième temporisation (timeout Autobaud),
et **en ce que** la phase de traitement itératif comprend en outre, pour chaque itération, une étape (54) d'interruption du procédé si la deuxième temporisation expire sans qu'une configuration de débit courante ait été validée.

6. Procédé selon l'une quelconque des revendications 1 à 5, **caractérisé en ce que** le réseau (1) est un bus CAN, et **en ce que** le dispositif (2₁) comprend un contrôleur CAN complété (34) par rapport à un contrôleur CAN classique (31) de façon à mettre en oeuvre le procédé selon l'invention de détection automatique du débit du réseau et de configuration au débit détecté.

7. Procédé selon la revendication 6, chacun des bits compris dans un message possédant un temps nominal défini par les paramètres suivants :
- un scalaire BRP, tel que : TQ = BRP / fₕ, avec TQ une unité de temps et fₕ la fréquence horloge du dispositif ;
- la longueur L_{PRS}, exprimée en nombre d'unité de temps TQ, d'un segment de propagation visant à compenser le délai physique sur le bus CAN ;
- les longueurs L_{PHS1} et L_{PHS2}, exprimées en nombre d'unité de temps TQ, de premier et second segments de phase permettant de positionner un point d'échantillonnage.
**caractérisé en ce que**, pour chacune de la pluralité de configurations de débit possibles, ledit mécanisme détermine des valeurs pour le scalaire BRP et les longueurs L_{PRS}, L_{PHS1} et L_{PHS2}, sans connaissance de la fréquence horloge fₕ du dispositif et sans hypothèse sur le débit du réseau.

8. Procédé selon la revendication 7, **caractérisé en ce que** ledit mécanisme met en oeuvre une boucle d'incrémentation de la longueur L_{PHS2}, elle-même incluse dans une boucle d'incrémentation de la longueur L_{PHS1}, elle-même incluse dans une boucle d'incrémentation de la longueur L_{PRS}, elle-même incluse dans une boucle d'incrémentation du scalaire BRP,
et **en ce que** les boucles d'incrémentation des longueurs L_{PRS}, L_{PHS1} et L_{PHS2} sont telles que les longueurs L_{PRS}, L_{PHS1} et L_{PHS2} sont incrémentées de façon homogène.

9. Dispositif destiné à être connecté à un réseau, **caractérisé en ce qu'**il comprend des moyens de détection automatique du débit du réseau et de configuration au débit détecté, comprenant eux-mêmes :
* des moyens d'initialisation comprenant :
- des moyens de basculement d'un mode normal à un mode d'écoute, dans lequel sont activés des moyens de blocage de messages émis par le dispositif vers le réseau, le dispositif continuant à recevoir des messages provenant du réseau ;
- des moyens d'initialisation du dispositif avec une configuration de débit initiale ;
- des moyens de déclenchement d'une première temporisation ;
* des moyens de traitement itératif comprenant les moyens suivants, activés lors de chaque itération :
- des premiers moyens de détection qu'au moins une condition d'adaptation de débit est vérifiée, les moyens suivants étant activés en cas de détection positive par les premiers moyens de détection : des moyens d'interruption du traitement itératif, des moyens de validation de la configuration de débit courante et des moyens de basculement du mode d'écoute au mode normal ;
- des seconds moyens de détection qu'au moins une condition de non-adaptation de débit est vérifiée ou que la première temporisation expire sans qu'une condition d'adaptation de débit ou une condition de non-adaptation de débit ait été vérifiée, les moyens suivants étant activés en cas de détection positive par les seconds moyens de détection : des moyens de réinitialisation de la première temporisation et des moyens de remplacement de la configuration de débit courante par une nouvelle configuration de débit obtenue par mise en oeuvre d'un mécanisme d'obtention d'une pluralité de configurations de débit possibles, sans connaissance d'une fréquence horloge fₕ du dispositif et sans hypothèse sur le débit du réseau.

10. Dispositif selon la revendication 9, **caractérisé en ce que** ladite au moins une condition de non-adaptation de débit est la détection par le dispositif d'une erreur, dite erreur de bit, sur au moins un bit d'un message reçu par le dispositif.

11. Dispositif selon l'une quelconque des revendications 9 et 10, **caractérisé en ce que** ladite au moins une condition d'adaptation de débit est l'acquittement par le dispositif d'un message reçu.

12. Dispositif selon l'une quelconque des revendications 9 à 11, **caractérisé en ce que** ledit mécanisme permet d'obtenir successivement toutes les configurations de débit possibles du dispositif.

13. Dispositif selon l'une quelconque des revendications 9 à 12, **caractérisé en ce que** les moyens d'initialisation comprennent en outre des moyens de déclenchement d'une deuxième temporisation,
et **en ce que** les moyens de traitement itératif comprennent en outre des troisièmes moyens de détection, activés lors de chaque itération, permettant de détecter si la deuxième temporisation expire sans qu'une configuration de débit courante ait été validée, des moyens d'interruption du procédé étant activés en cas de détection positive par les troisièmes moyens de détection.

14. Dispositif selon l'une quelconque des revendications 9 à 13, **caractérisé en ce que** le réseau est un bus CAN, et **en ce que** le dispositif comprend un contrôleur CAN complété comprenant lui-même lesdits moyens de détection automatique du débit du réseau et de configuration au débit détecté.

15. Dispositif selon la revendication 14, chacun des bits compris dans un message possédant un temps nominal défini par les paramètres suivants :
- un scalaire BRP, tel que : TQ = BRP / fₕ, avec TQ une unité de temps et fₕ la fréquence horloge du dispositif ;
- la longueur L_{PRS}, exprimée en nombre d'unité de temps TQ, d'un segment de propagation visant à compenser le délai physique sur le bus CAN ;
- les longueurs L_{PHS1} et L_{PHS2}, exprimées en nombre d'unité de temps TQ, de premier et second segments de phase permettant de positionner un point d'échantillonnage.
**caractérisé en ce que**, pour chacune de la pluralité de configurations de débit possibles, ledit mécanisme détermine des valeurs pour le scalaire BRP et les longueurs L_{PRS}, L_{PHS1} et L_{PHS2}, sans connaissance de la fréquence horloge fₕ du dispositif et sans hypothèse sur le débit du réseau.

16. Dispositif selon la revendication 15, **caractérisé en ce que** ledit mécanisme met en oeuvre une boucle d'incrémentation de la longueur L_{PHS2}, elle-même incluse dans une boucle d'incrémentation de la longueur L_{PHS1}, elle-même incluse dans une boucle d'incrémentation de la longueur L_{PRS}, elle-même incluse dans une boucle d'incrémentation du scalaire BRP,
et **en ce que** les boucles d'incrémentation des longueurs L_{PRS}, L_{PHS1} et L_{PHS2} sont telles que les longueurs L_{PRS}, L_{PHS1} et L_{PHS2} sont incrémentées de façon homogène.

17. Dispositif selon l'une quelconque des revendications 14 à 16, **caractérisé en ce que** les moyens de basculement du mode normal au mode d'écoute comprennent des moyens génération d'un signal de sélection de mode (Autobaud), prenant la valeur « 0 » ou « 1 » selon que le dispositif doit fonctionner dans le mode normal ou d'écoute respectivement,
**en ce que** le contrôleur CAN complété comprend un contrôleur CAN classique modifié pour comprendre lui-même lesdits moyens de détection automatique du débit du réseau et de configuration au débit détecté, hormis lesdits moyens de blocage de messages émis,
et **en ce que** les moyens de blocage de messages émis comprennent des moyens de réalisation de la fonction logique « OU » entre le signal de sélection de mode et le signal d'émission (TxDC') du contrôleur CAN classique, le signal de sortie des moyens de réalisation de la fonction logique « OU » constituant le signal d'émission (TxDC) du contrôleur CAN complété.

18. Dispositif selon la revendication 17, **caractérisé en ce que** le contrôleur CAN complété comprend en outre des moyens de rebouclage de la sortie sur l'entrée du contrôleur CAN classique, comprenant :
- des moyens de réalisation de la fonction logique « ET » entre le signal d'émission (TxDC') du contrôleur CAN classique et le signal de réception (RxDC) du contrôleur CAN complété ;
- des moyens de multiplexage recevant sur une première entrée le signal de sortie des moyens de réalisation de la fonction logique « ET » et sur une deuxième entrée le signal de réception (RxDC) du contrôleur CAN complété, le signal de sortie des moyens de multiplexage constituant le signal de réception (RxDC') du contrôleur CAN classique, les moyens de multiplexage étant commandés par le signal de sélection de mode de façon que la première ou la seconde entrée soit sélectionnée selon que le signal de sélection de mode prend la valeur « 1 » ou « 0 » respectivement.

## Claims

1. Method for automatic detection of a network data rate and for configuration at the detected data rate by a device (2₁) connected to the network (1), **characterised in that** it includes:
* an initialisation phase (51) including the following steps:
- the device is put into a listening mode, in which it can receive messages from the network but it cannot send messages on the network;
- the device is initialised with an initial data rate configuration;
- a first timeout is started;
* an iterative processing phase (52), comprising the following steps for each iteration:
- if at least one data rate adaptation condition is satisfied (57), the iterative processing phase is interrupted, the current data rate configuration is validated and the device is put into a normal mode (58);
- if at least one data rate non-adaptation condition is satisfied (55) or if the first timeout elapses without a data rate adaptation condition or a data rate non-adaptation condition being satisfied (56), the first timeout is reinitialised (59) and the current data rate configuration is replaced by a new data rate configuration obtained by using a mechanism for obtaining several possible data rate configurations without knowledge of a clock frequency fₕ of the device and without any assumption about the network data rate (510 to 518).

2. Method according to claim 1, **characterised in that** the said at least one data rate non-adaptation condition is detection by the device of an error called a bit error on at least one bit of a message received by the device.

3. Method according to any one of the claims 1 and 2, **characterised in that** the said at least one data rate adaptation condition is acknowledgement of a received message by the device.

4. Method according to any one of the claims 1 to 3, **characterised in that** the said mechanism can be used to obtain all possible data rate configurations of the device one after the other.

5. Method according to any one of the claims 1 to 4, **characterised in that** the initialisation phase also comprises a step to start a second timeout,
and **in that** the iterative processing phase also comprises a step (54) to interrupt the procedure for each iteration, if the second timeout expires without a current data rate configuration being validated.

6. Method according to any one of the claims 1 to 5, **characterised in that** the network (1) is a CAN bus and the device (2₁) comprises a completed CAN controller (34) that is an extension of a classical CAN controller (31) so that the method according to the invention for automatic detection of the network data rate and for configuration to the detected data rate can be implemented.

7. Method according to claim 6, each of the bits included in a message having a nominal time, defined by the following parameters:
- a scalar BRP, such that TQ = BRP/fₕ, where TQ is a time quantum and fₕ is the clock frequency of the device;
- the length L_{PRS} of a propagation segment designed to compensate for the physical delay on the CAN bus, expressed as a number of time quanta TQ;
- the lengths L_{PHS1} and L_{PHS2} expressed as a number of time quanta TQ, of first and second phase segments used to position a sampling point;
**characterised in that** the said mechanism advantageously determines values for the scalar BRP and the lengths L_{PRS}, L_{PHS1} and L_{PHS2}, for each of the several possible data rate configurations, without knowing the clock frequency fₕ of the device and without any assumption about the network data rate.

8. Method according to claim 7, **characterised in that** the said mechanism uses an increment loop of the length L_{PHS2}, itself included in an increment loop of the length L_{PHS1}, itself included in an increment loop of the length L_{PRS}, itself included in a increment loop of the scalar BRP,
and **in that** the increment loops for lengths L_{PRS}, L_{PHS1} and L_{PHS2} are such that the lengths L_{PRS}, L_{PHS1} and L_{PHS2} are incremented uniformly.

9. Device designed to be connected to a network, **characterised in that** it comprises means for automatic detection of the network data rate and for configuration to the detected data rate, these means comprising:
* initialisation means comprising:
- means of changing over from a normal mode to a listening mode, in which locking means of messages sent by the device to the network are activated, the device continuing to receive messages from the network;
- means of initialising the device with an initial data rate configuration;
- means of starting a first timeout;
* iterative processing means comprising the following means activated during each iteration:
- first means of detection, for detecting that at least one data rate adaptation condition is satisfied, the following means being activated in case of positive detection by the first detection means: means of interrupting the iterative processing, means of validating the current data rate configuration and means of changing over from the listening mode to the normal mode;
- second means of detection, for detecting that at least one data rate non-adaptation condition is satisfied or that the first timeout has expired without a data rate adaptation condition or non-adaptation condition having been satisfied, the following means being activated in the case of a positive detection by the second detection means: means of reinitialising the first timeout and means of replacing the current data rate configuration by a new data rate configuration obtained by using a mechanism for obtaining several possible data rate configurations without knowing a clock frequency fₕ of the device and without any assumption about the network data rate.

10. Device according to claim 9, **characterised in that** the said at least one data rate non-adaptation condition is when the device detects an error, called a bit error, on at least one bit of a message received by the device.

11. Device according to any one of the claims 9 and 10, **characterised in that** the said at least one data rate adaptation condition is when the device acknowledges a received message.

12. Device according to any one of the claims 9 to 11, **characterised in that** the said mechanism can be used to obtain all possible data rate configurations of the device one after the other.

13. Device according to any one of the claims 9 to 12, **characterised in that** the initialisation means also include means of starting a second timeout,
and **in that** the iterative processing means also comprise third detection means activated during each iteration to detect if the second timeout expires without a current data rate configuration having been validated, means of interrupting the method being activated if the third detection means make a positive detection.

14. Device according to any one of the claims 9 to 13, **characterised in that** the network is a CAN bus and the device comprises a completed CAN controller itself comprising the said means for automatic detection of the network data rate and for configuration to the detected data rate.

15. Device according to claim 14, each of the bits included in a message has a nominal time defined by the following parameters:
- a scalar BRP, such that TQ = BRP/fₕ, where TQ is a time quantum and fₕ is the clock frequency of the device;
- the length L_{PRS} expressed as a number of time quanta TQ, of a propagation segment designed to compensate for the physical delay on the CAN bus;
- the lengths L_{PHS}, and L_{PHS2} expressed as a number of time quanta TQ, of first and second phase segments used to position a sampling point;
**characterised in that** the said mechanism advantageously determines values for the scalar BRP and the lengths L_{PRS}, L_{PHS1} and L_{PHS2}, for each of the several possible data rate configurations, without knowing the clock frequency fₕ of the device and without any assumption about the network data rate.

16. Device according to claim 15, **characterised in that** the said mechanism uses an increment loop of the length L_{PHS2}, itself included in an increment loop of the length L_{PHS1}, itself included in an increment loop of the length L_{PRS}, itself included in an increment loop of the scalar BRP,
and **in that** the increment loops of lengths L_{PRS}, L_{PHS1} and L_{PHS2} are such that the lengths L_{PRS}, L_{PHS1} and L_{PHS2} are incremented uniformly.

17. Device according to any one of the claims 14 to 16, **characterised in that** the means of changing over from the normal mode to the listening mode comprise means of generating a mode selection signal, equal to the value "0" or "1" depending on whether the device is to operate in the normal mode or the listening mode, respectively,
and **in that** the completed CAN controller comprises a classical CAN controller modified so that it itself includes the said means for automatic detection of the network data rate and for configuration to the detected data rate, apart from the said means of blocking the sent messages,
and **in that** the means of blocking the sent messages include means of performing the "OR" logical function between the mode selection signal and the send signal of the classical CAN controller, the output signal from the means of performing the "OR" logical function being used as the send signal of the completed CAN controller.

18. Device according to claim 17, **characterised in that** the completed CAN controller also includes means of looping the output back onto the input of the classical CAN controller, comprising:
- means of performing the "AND" logical function between the send signal of the classical CAN controller and the reception signal of the completed CAN controller;
- multiplexing means receiving the output signal from the means of performing the "AND" logical function on a first input, and the reception signal from the completed CAN controller on a second input, the output signal from the multiplexing means being the reception signal of the classical CAN controller, the multiplexing means being controlled by the mode selection signal such that the first input or the second input is selected depending on whether the mode selection signal is equal to the value "1" or "0" respectively.

## Patentansprüche

1. Verfahren zum automatischen Ermitteln der Übertragungsgeschwindigkeit eines Netzwerks und zum Konfigurieren auf der Übertragungsgeschwindigkeit, die von einer Vorrichtung (2₁) ermittelt wird, die an das Netzwerk (1) angeschlossen ist, **dadurch gekennzeichnet, dass** es Folgendes umfasst:
- eine Initialisierungsphase (51), welche die folgenden Schritte umfasst:
-- Versetzen der Vorrichtung in einen Hörmodus, in dem sie Nachrichten empfangen kann, die von dem Netzwerk stammen, jedoch keine Nachrichten im Netzwerk senden kann;
-- Initialisieren der Vorrichtung mit einer anfänglichen Konfiguration der Übertragungsgeschwindigkeit;
-- Auslösen einer ersten Wartezeit (timeout CAN);
- eine iterative Verarbeitungsphase (52), die für jede Iteration die folgenden Schritte umfasst:
-- wenn mindestens eine Bedingung der Anpassung der Übertragungsgeschwindigkeit erfüllt ist (57), Unterbrechen der iterativen Verarbeitungsphase, Bestätigen der aktuellen Konfiguration der Übertragungsgeschwindigkeit und Versetzen der Vorrichtung in einen Normalmodus (58);
-- wenn mindestens eine Bedingung der Nichtanpassung der Übertragungsgeschwindigkeit erfüllt ist (55) oder wenn die erste Wartezeit abläuft, ohne dass eine Bedingung der Anpassung der Übertragungsgeschwindigkeit oder eine Bedingung der Nichtanpassung der Übertragungsgeschwindigkeit erfüllt ist (56), Reinitialisieren der ersten Wartezeit (59) und Ersetzen der aktuellen Konfiguration der Übertragungsgeschwindigkeit durch eine neue Konfiguration der Übertragungsgeschwindigkeit, die durch das Umsetzen eines Mechanismus zum Erzielen einer Vielzahl von möglichen Konfigurationen der Übertragungsgeschwindigkeit erzielt wird, und zwar ohne Kenntnis einer Taktfrequenz fₕ der Vorrichtung und ohne Hypothese bezüglich der Übertragungsgeschwindigkeit des Netzwerks (510 bis 518).

2. Verfahren nach Anspruch 1, **dadurch gekennzeichnet, dass** die mindestens eine Bedingung der Nichtanpassung der Übertragungsgeschwindigkeit die Ermittlung durch die Vorrichtung eines Fehlers, des so genannten Bitfehlers, an mindestens einem Bit einer Nachricht, die von der Vorrichtung empfangen wird, ist.

3. Verfahren nach einem der Ansprüche 1 und 2, **dadurch gekennzeichnet, dass** die mindestens eine Bedingung der Anpassung der Übertragungsgeschwindigkeit die Quittung durch die Vorrichtung einer empfangenen Nachricht ist.

4. Verfahren nach einem der Ansprüche 1 bis 3, **dadurch gekennzeichnet, dass** es der Mechanismus ermöglicht, nacheinander alle möglichen Konfigurationen der Übertragungsgeschwindigkeit der Vorrichtung zu erzielen.

5. Verfahren nach einem der Ansprüche 1 bis 4, **dadurch gekennzeichnet, dass** die Initialisierungsphase ferner einen Schritt des Auslösens einer zweiten Wartezeit (timeout Autobaud) umfasst,
und dass die iterative Verarbeitungsphase ferner für jede Iteration einen Schritt (54) des Unterbrechens des Verfahrens umfasst, wenn die zweite Wartezeit abläuft, ohne dass eine aktuelle Konfiguration der Übertragungsgeschwindigkeit bestätigt wurde.

6. Verfahren nach einem der Ansprüche 1 bis 5, **dadurch gekennzeichnet, dass** das Netzwerk (1) ein CAN-Bus ist und dass die Vorrichtung (2₁) einen CAN-Controller (34) umfasst, der im Verhältnis zu einem herkömmlichen CAN-Controller (31) ergänzt ist, um das erfindungsgemäße Verfahren zum automatischen Ermitteln der Übertragungsgeschwindigkeit des Netzwerks und zum Konfigurieren der ermittelten Übertragungsgeschwindigkeit umzusetzen.

7. Verfahren nach Anspruch 6, wobei jedes der Bits, die in einer Nachricht enthalten sind, eine Nominalzeit besitzt, die durch folgende Parameter definiert ist:
- einen Skalar BRP, wie etwa: TQ = BRP/fₕ, wobei TQ eine Zeiteinheit ist und fₕ die Taktfrequenz der Vorrichtung ist;
- die Länge L_{PRS}, ausgedrückt durch die Anzahl von Zeiteinheiten TQ, eines Ausbreitungssegments, das darauf abzielt, die physische Verzögerung auf dem CAN-Bus auszugleichen;
- die Längen L_{PHS1} und L_{PHS2}, ausgedrückt durch die Anzahl von Zeiteinheiten TQ, von ersten und zweiten Phasensegmenten, die es ermöglichen, einen Abtastpunkt zu positionieren,
**dadurch gekennzeichnet, dass** der Mechanismus für jede der Vielzahl von möglichen Konfigurationen der Übertragungsgeschwindigkeit Werte für den Skalar BRP und die Längen L_{PRS}, L_{PHS1} und L_{PHS2} ohne Kenntnis der Taktfrequenz fₕ der Vorrichtung und ohne Hypothese bezüglich der Übertragungsgeschwindigkeit des Netzwerks bestimmt.

8. Verfahren nach Anspruch 7, **dadurch gekennzeichnet, dass** der Mechanismus eine Inkrementierungsschleife der Länge L_{PHS2} umsetzt, die wiederum in einer Inkrementierungsschleife der Länge L_{PHS1} enthalten ist, die wiederum in einer Inkrementierungsschleife der Länge L_{PHS2} enthalten ist, die wiederum in einer Inkrementierungsschleife des Skalars BRP enthalten ist,
und dass die Inkrementierungsschleifen der Längen L_{PRS}, L_{PHS1} und L_{PHS2} derart sind, dass die Längen L_{PRS}, L_{PHS1} und L_{PHS2} einheitlich inkrementiert werden.

9. Vorrichtung zum Anschließen an ein Netzwerk, **dadurch gekennzeichnet, dass** sie Mittel zum automatischen Ermitteln der Übertragungsgeschwindigkeit des Netzwerks und zum Konfigurieren auf der ermittelten Übertragungsgeschwindigkeit umfasst, die wiederum Folgendes umfassen:
- Initialisierungsmittel, umfassend:
-- Mittel zum Umschalten von einem Normalmodus auf einen Hörmodus, in dem Mittel aktiviert werden zum Blockieren von Nachrichten, die von der Vorrichtung an das Netzwerk gesendet werden, wobei die Vorrichtung weiterhin Nachrichten empfängt, die von dem Netzwerk stammen;
-- Mittel zum Initialisieren der Vorrichtung mit einer anfänglichen Konfiguration der Übertragungsgeschwindigkeit;
-- Mittel zum Auslösen einer ersten Wartezeit;
- iterative Verarbeitungsmittel, welche die folgenden Mittel umfassen, die bei jeder Iteration aktiviert werden:
-- erste Mittel zum Ermitteln, dass mindestens eine Bedingung der Anpassung der Übertragungsgeschwindigkeit erfüllt ist, wobei die folgenden Mittel bei einer positiven Ermittlung durch die ersten Ermittlungsmittel aktiviert werden: Mittel zum Unterbrechen der iterativen Verarbeitung, Mittel zum Bestätigen der aktuellen Konfiguration der Übertragungsgeschwindigkeit und Mittel zum Umschalten vom Hörmodus auf den Normalmodus;
-- zweite Mittel zum Ermitteln, dass mindestens eine Bedingung der Nichtanpassung der Übertragungsgeschwindigkeit erfüllt ist oder dass die erste Wartezeit abläuft, ohne dass eine Bedingung der Anpassung der Übertragungsgeschwindigkeit oder eine Bedingung der Nichtanpassung der Übertragungsgeschwindigkeit erfüllt ist, wobei die folgenden Mittel bei einer positiven Ermittlung durch die zweiten Ermittlungsmittel aktiviert werden: Mittel zum Reinitialisieren der ersten Wartezeit und Mittel zum Ersetzen der aktuellen Konfiguration der Übertragungsgeschwindigkeit durch eine neue Konfiguration der Übertragungsgeschwindigkeit, die durch das Umsetzen eines Mechanismus zum Erzielen einer Vielzahl von möglichen Konfigurationen der Übertragungsgeschwindigkeit erzielt wird, und zwar ohne Kenntnis einer Taktfrequenz fₕ der Vorrichtung und ohne Hypothese bezüglich der Übertragungsgeschwindigkeit des Netzwerks.

10. Vorrichtung nach Anspruch 9, **dadurch gekennzeichnet, dass** die mindestens eine Bedingung der Nichtanpassung der Übertragungsgeschwindigkeit die Ermittlung durch die Vorrichtung eines Fehlers, des so genannten Bitfehlers, an mindestens einem Bit einer Nachricht, die von der Vorrichtung empfangen wird, ist.

11. Vorrichtung nach einem der Ansprüche 9 und 10, **dadurch gekennzeichnet, dass** die mindestens eine Bedingung der Anpassung der Übertragungsgeschwindigkeit die Quittung durch die Vorrichtung einer empfangenen Nachricht ist.

12. Vorrichtung nach einem der Ansprüche 9 bis 11, **dadurch gekennzeichnet, dass** es der Mechanismus ermöglicht, nacheinander alle möglichen Konfigurationen der Übertragungsgeschwindigkeit der Vorrichtung zu erzielen.

13. Vorrichtung nach einem der Ansprüche 9 bis 12, **dadurch gekennzeichnet, dass** die Initialisierungsmittel ferner Mittel zum Auslösen einer zweiten Wartezeit umfassen,
und dass die iterativen Verarbeitungsmittel ferner dritte Ermittlungsmittel umfassen, die bei jeder Iteration aktiviert werden und es ermöglichen zu ermitteln, ob die zweite Wartezeit abläuft, ohne dass eine aktuelle Konfiguration der Übertragungsgeschwindigkeit bestätigt wird, wobei Mittel zum Unterbrechen des Verfahrens bei einer positiven Ermittlung durch die dritten Ermittlungsmittel aktiviert werden.

14. Vorrichtung nach einem der Ansprüche 9 bis 13, **dadurch gekennzeichnet, dass** das Netzwerk ein CAN-Bus ist und dass die Vorrichtung einen ergänzten CAN-Controller umfasst, der wiederum die Mittel zum automatischen Ermitteln der Übertragungsgeschwindigkeit des Netzwerks und zum Konfigurieren auf der ermittelten Übertragungsgeschwindigkeit umfasst.

15. Vorrichtung nach Anspruch 14, wobei jedes der Bits, die in einer Nachricht enthalten sind, eine Nominalzeit besitzt, die durch folgende Parameter definiert ist:
- einen Skalar BRP, wie etwa: TQ = BRP/fₕ, wobei TQ eine Zeiteinheit ist und fₕ die Taktfrequenz der Vorrichtung ist;
- die Länge L_{PRS}, ausgedrückt durch die Anzahl von Zeiteinheiten TQ, eines Ausbreitungssegments, das darauf abzielt, die physische Verzögerung auf dem CAN-Bus auszugleichen;
- die Längen L_{PHS1} und L_{PHS2}, ausgedrückt durch die Anzahl von Zeiteinheiten TQ, von ersten und zweiten Phasensegmenten, die es ermöglichen, einen Abtastpunkt zu positionieren,
**dadurch gekennzeichnet, dass** für jede der Vielzahl von möglichen Konfigurationen der Übertragungsgeschwindigkeit der Mechanismus Werte für den Skalar BRP und die Längen L_{PRS}, L_{PHS1} und L_{PHS2} bestimmt, und zwar ohne Kenntnis der Taktfrequenz fₕ der Vorrichtung und ohne Hypothese bezüglich der Übertragungsgeschwindigkeit des Netzwerks.

16. Vorrichtung nach Anspruch 15, **dadurch gekennzeichnet, dass** der Mechanismus eine Inkrementierungsschleife der Länge L_{PHS2} umsetzt, die wiederum in einer Inkrementierungsschleife der Länge L_{PHS1} enthalten ist, die wiederum in einer Inkrementierungsschleife der Länge L_{PRS} enthalten ist, die wiederum in einer Inkrementierungsschleife des Skalars BRP enthalten ist,
und dass die Inkrementierungsschleifen der Längen L_{PRS}, L_{PHS1} und L_{PHS2} derart sind, dass die Längen L_{PRS}, L_{PHS1} und L_{PHS2} einheitlich inkrementiert werden.

17. Vorrichtung nach einem der Ansprüche 14 bis 16, **dadurch gekennzeichnet, dass** die Mittel zum Umschalten vom Normalmodus auf den Hörmodus Mittel zum Generieren eines Modusauswahlsignals (Autobaud) umfassen, das den Wert "0" oder "1" annimmt, je nachdem ob die Vorrichtung jeweils im Normalmodus oder im Hörmodus funktionieren soll,
dass der ergänzte CAN-Controller einen geänderten herkömmlichen CAN-Controller umfasst, um wiederum die Mittel zum automatischen Ermitteln der Übertragungsgeschwindigkeit des Netzwerks und zum Konfigurieren auf der ermittelten Übertragungsgeschwindigkeit, außer den Mitteln zum Blockieren gesendeter Nachrichten, zu umfassen
und dass die Mittel zum Blockieren gesendeter Nachrichten Mittel zum Ausbilden der logischen Funktion "ODER" zwischen dem Modusauswahlsignal und dem Sendesignal (TxDC') des herkömmlichen CAN-Controllers umfassen, wobei das Ausgangssignal der Mittel zum Ausbilden der logischen Funktion "ODER" das Sendesignal (TxDC) des ergänzten CAN-Controllers bildet.

18. Vorrichtung nach Anspruch 17, **dadurch gekennzeichnet, dass** der ergänzte CAN-Controller ferner Mittel zum Einschleifen des Ausgangs mit dem Eingang des herkömmlichen CAN-Controllers umfasst, umfassend:
-- Mittel zum Ausbilden der logischen Funktion "UND" zwischen dem Sendesignal (TxDC') des herkömmlichen CAN-Controllers und dem Empfangssignal (RxDC) des ergänzten CAN-Controllers;
-- Multiplexmittel, die an einem ersten Eingang das Ausgangssignal der Mittel zum Ausbilden der logischen Funktion "UND" und an einem zweiten Eingang das Empfangssignal (RxDC) des ergänzten CAN-Controllers empfangen, wobei das Ausgangssignal der Multiplexmittel das Empfangssignal (RxDC') des herkömmlichen CAN-Controllers bildet, wobei die Multiplexmittel durch das Modusauswahlsignal derart gesteuert werden, dass der erste oder der zweite Eingang ausgewählt wird, je nachdem, ob das Modusauswahlsignal jeweils den Wert "1" oder "0" annimmt.
